# EUROPEAN PATENT SPECIFICATION

(11) **EP 1 170 923 B1**
(45) Date of publication and mention of the grant of the patent: **25.05.2005**
(21) Application number: 01115599.1
(22) Date of filing: 28.06.2001
(51) Int. Cl.: H04L 29/06

(54) **Interception method and system for compensating disadvantageous characteristics of a communication protocol**
Abfangverfahren und -vorrichtung zur Kompensation nachteiliger Eigenschaften eines Kommunikationsprotokolls
Procédé et dispositif d'interception pour compenser les caracteristiques defavorables d'un protocole de communication

(30) Priority: 07.07.2000 EP 00114613
(43) Date of publication of application: 09.01.2002
(73) Proprietor: International Business Machines Corporation, Armonk, NY 10504 (US)
(72) Inventor: Günther, Ludwig, 64665 Aisbach (DE); Petrov, Tzvetan, 69118 Heidelberg (DE); Sabiwalsky, Dirk, 69214 Eppelheim (DE)
(74) Representative: Duscher, Reinhard, Dr.

(56) References cited:
- US-A- 5 673 322
- FLOYD R ET AL: "MOBILE WEB ACCESS USING ENETWORK WEB EXPRESS" IEEE PERSONAL COMMUNICATIONS, IEEE COMMUNICATIONS SOCIETY, US, vol. 5, no. 5, 1 October 1998 (1998-10-01), pages 47-52, XP000786616 ISSN: 1070-9916
- HANSEN J S ET AL: "WORKSHOP IMC. INFORMATION VISUALIZATION AND MOBILE COMPUTING, PROCEEDINGS OF IMC, XX, XX" WORKSHOP IMC. INFORMATION VISUALIZATION AND MOBILE COMPUTING, PROCEEDINGS OF IMC, XX, XX, vol. 1, no. 2, 1998, pages 39-48, XP002062285

## Description

### 1. Background of the Invention

### 1.1 Field of the Invention

The present invention relates to a method and corresponding means for communication between computer systems and/or pervasive computing devices. More particularly the current invention proposes a teaching to compensate for disadvantageous characteristics of a communication protocol in situations where the communication protocol itself cannot be replaced.

### 1.2 Description and Disadvantages of Prior Art

The current invention deals with the handling of disadvantages of a communication protocol. Such disadvantages (as it will be seen later) are inherent to many types of communication protocols. As wireless communication protocols are the most prominent well-known protocols reflecting such types of disadvantages the current description will concentrate on wireless communication protocols. Nevertheless, the same or similar disadvantages may be found in other types of communication protocols; of course the current teaching may be applied to these communication protocols as well. The current teaching is independent from the very communication protocol it is applied to.

For several years industry watchers have been forecasting an explosion in wireless Internet usage. With more than 200 million Internet users and more than 400 million mobile subscribers in the marketplace there is every reason to believe that this industry, as it grows, will have a dramatic impact on the way how we access information.

The mobile communications marketplace continues to expand incredibly fast, with potential revenue growth supported by an ever-increasing variety of new services and new target segments. Each of these new services and segments bring with them fresh challenges for business activities outside traditional office settings. The wireless Internet usage allows businesses to deliver new types of services both internal services like sales automation, document management; and external services like travel reservations, stock trading, information selling - faster and easier than ever before. Mobile data communication will set new business standards for timely access to people and information. Managers, business partners, and account executives-all of whom are expected to spend more of their time in the field-will profit from remote access to enterprise networks.

The mobile data communication and its increasing acceptance with the users will substantially influence the advancement of the terrestrial networks. Apart from the infrastructural effects, which result from the spreading of the mobile radio data transmission networks, there is a set of special problems, which are exemplified with at wireless data communication protocols; of course other communication protocols suffer from the same deficiencies. Some of these disadvantages are the following ones:
1. Low bandwidth / transmission speed - the transmission bandwidth of radio data transmission services remains today still far behind that of stationary networks.
2. High costs - the transmission costs over wireless communication networks are much higher than the costs stationary networks.
3. High complexity - in a dynamic architecture logical connections must be mapped on different physical structures.
4. Low reliability - wireless connection are significantly less reliable then wireline connections
5. High latency - the response time for wireless links is much slower than that of terrestrial links.
6. High connection overhead - each data request for a TCP/IP based server requires the client part to open an TCP/IP socket. The consequence is intensification of the data overhead and increasing of the latency.

A wide variety of problems could come up when wireless communications terminals send and receive signals over the air. The signals of all the terminals are subject to mutual interference. The characteristics of the propagation medium change randomly as users move, and the mobile radio channel introduces random variation in the received signal power and other distortions, such as frequency shifts and the spreading of signals over time. Signals that travel over the air are also more vulnerable to jamming and interception than are those transmitted through wires or fibers. As a result transmitted data packets could be lost. These limitations are often addressed with a combination of sophisticated signal processing techniques and antennas, but there is no comprehensive software based solution. However, these solutions add to the complexity of wireless networks and increase power requirements.

The small bandwidth is the reason, which additionally drives up the costs of data links with wireless terminals. At present the transmission speed is limited to 9600 Bit/s (ISDN: 64,000 Bit/s). This restriction is based on the technical concept of GSM (global system for mobile Communication). It transfers only approximately 13 kBit/s per channel. There were different attempts to moderate the disadvantages mentioned at least. With the specification of the GSM phase II one specified a data mode for the transfer with 14,4 kBit/s. But the increased rate goes at expense of the Forward Error Correction. Therefore the quality of the connections sinks with continuous infrastructure.

GSM is not actually designed for mobile Internet access. Even with a 14,4 kBit/s data rate these procedures offer only punctual improvements. Fundamental disadvantages of the original conception fixed on the speech transmission do not eliminate them. For example the GSM channel reservation is appropriate for a line-mediating network. Thus the line is charged for the duration of the discussion or the data transmission.

In contrast to other areas of information technology, wireless communications has yet to converge toward a single technical standard or even a very small number of them. Instead it appears that diversity will endure for the foreseeable future. As long as this technical standard is not available yet other ways must be investigated (perhaps based on software solutions), in order to be able to provide a solution to the above problems.

A further problem dimension is introduced by the use of TCP/IP over wireless networks. Such of a combination of a first and a second protocol is sometimes inevitable. The first protocol, TCP/IP, has to be used because is simply "The" protocol of the Internet; on the other hand the second protocol, the wireless communication protocol, has to be used due to the specific communication environment for which there this is no other protocol available for substitution. In such situations one might be confronted with the problem of how to deal with disadvantageous characteristics of a certain protocol which either might be inherent to the protocol itself or which might be the results of the combination of two protocols.
In the current situation of TCP/IP over wireless networks high delay and variation in data loss result in unacceptable performance for many standard multimedia applications and reliable protocols such as TCP/IP. Both multimedia applications and reliable protocols adapt to long term end-to-end estimates of delay and packet loss between the data source and destination. However, they do not perform well when rapid variations in network characteristics occur, causing high fluctuations in these estimates. In order for these applications and protocols to achieve good performance, the protocol for transmitting data to mobile hosts must provide communication with reliable connections and negligible data loss (which is not the case for wireless communication protocols).

The typically wireless Internet access works very similar to network access using fixed data modems. Usually the mobile terminal (a combination of Notebook and wireless data phone) calls a fixed network modem placed on the ISP (Internet Service Provider) side. Thereby it make use of the PPP (RFC1662) or the SLIP(RFC1055) in order to enable TCP/IP over phone lines (additionally there are also proprietary solutions of individual portable radio network carriers). But both PPP and SLIP are not very well suited for unreliable radio connections because of transmission overhead. There is a certain amount of transmission overhead in the sending and receiving communication part associated with maintaining timers, scheduling processes and specific protocol control data.

IP (Internet Protocol) is a connectionless packet-oriented protocol of the network layer of the OSI reference model. In the transport layer usually TCP (transport control protocol) is applied. TCP uses IP. TCP is a connection-oriented and reliable protocol, including error recognition and -correction, flow control, avoidance of congestion in routers and fairness among network components.
A user of the TCP protocol can be sure to get his data complete and without errors. The price for that is a slower transmission over error susceptible channels. But by using a perfected windowing technique TCP eliminates this shortage. A sliding window allows TCP to send several data segments and await their acknowledges afterwards. As soon as an acknowledge is received, the window is shifted and another segment can be send. For every sent segment TCP starts a separate timer, which possibly signals a missing acknowledge and initiates a retransmission of the segment.
With the help of Congestion Avoidance, Multiplicative Decrease, and Slow Start TCP adapts to the network condition and avoids an overload of the network.
Today's networks offer very low error rates (~10-6). The TCP mechanisms are therefore designed for wired networks with low error rates. A typical wireless network can't provide such good transmission quality and small delays. Moreover the lower OSI layers for wireless networks use techniques for error recognition and correction, which increase the delays additionally.
TCP may take such delays for congestion. While the perfected mechanisms of the wireless network layers provide a faultless transmission, TCP timers expire and initiate retransmissions. These timers are adapted dynamically by measuring the round trip time. A new time is only taken when an acknowledge is received for a segment, which has not yet been retransmitted. After a period of error-free transmission the timers are accordingly short.
If there is a short phase of disturbance or poor transmission conditions, the error correction mechanisms of the wireless network layers cause longer delays and thereby longer TCP round trip times. TCP reacts with expiring timers and retransmissions. They are unnecessary, because the wireless network layers already provides an error free transmission. TCP interprets expired times (or data loss) always as a sign of congestion. The effect are longer timers and a reduction of size of the sliding window. The transmission rate drops dramatically. Even when the transmission in the network is perfect again, TCP still needs some time to adapt its timers to this condition.

Since TCP interprets all acknowledge delays as congestion, it can't react correctly in these situations which are typical to a wireless network. So TCP is not the optimal protocol solution for transferring data in wireless networks.

US Patent 5, 673,322 discloses an interface between a protected computer or computer network and the World Wide Web (WWW). The interface comprises a split proxy system that encapsulates TCP/IP transmissions into a script transmission, which is not subject to problems in high latency systems, thereby greatly improving WWW access, via a wire less modem or other low-bandwidth communications network.

### 1.3 Objective of the Invention

The invention is based on the objective to provide an approach that compensates for disadvantageous characteristics of a communication protocol in situations where the communication protocol itself cannot be replaced.

### 2. Summary and Advantages of the Invention

The objectives of the invention are solved by the independent claims. Further advantageous arrangements and embodiments of the invention are set forth in the respective subclaims.

The present invention relates to means and a method of data communication compensating characteristics of a first protocol for data communication between a client application and a server .application.

Communication requests of the client application and the server application adhering to a second protocol are intercepted by an client Interceptor and a server Interceptor.
Besides mapping the second protocol onto the first protocol and back again the Interceptors compensate disadvantageous characteristics inherent to the first protocol or arising from the combination of protocols transparently.

In modern interconnected computers environments developers of applications very often are not free in selecting the type of communication protocol. For instance to participate in the Internet most applications are enforced to exploit the TCP/IP protocol. On the other hand a technology explosion with respect to mobile and pervasive computing devices takes place. With these new computing devices new types of lower level communication protocols have to be handled to interconnect with these devices. Very often the straight forward approach to communicate via TCP/IP directly over these lower level protocols introduces above mentioned deficiencies. The Interceptor approach of the current invention provides an efficient teaching to compensate for these deficiencies transparently.

### 3. Brief Description of the Drawings

**Figure 1** visualizes a typical state of the art situation which gives rise to above mentioned problems.
**Figure 2** visualizes in a contrasting manner with respect to Fig. 1 how and where the proposed intercepting mechanism is extending the state of the art situation.
**Figure 3** reflects an overall situation in which the proposed Interceptor technology can be exploited beneficially.
**Figure 4** visualizes the system architecture of the Interceptor solution in a layering model.
**Figure 5** visualizes the Interceptor architecture of Fig. 4 now making use of a more modular view.
**Figure 6** depicts a typical GSM network according to the state of the art wherein a mobile phone is connected to the server application.
**Figure 7** reflects how the Interceptor approach can be exploited to multiplex a multitude of parallel connections over a single connection.

### 4. Description of the Preferred Embodiment

In the drawings and specification there has been set forth a preferred embodiment of the invention and, although specific terms are used, the description thus given uses terminology in a generic and descriptive sense only and not for purposes of limitation.

The present invention can be realized in hardware, software, or a combination of hardware and software. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.
Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

The current invention is illustrated based on the example of a wireless communication protocol and the TCP/IP protocol as representatives of a first and second protocol. Nevertheless the current invention is completely independent from the specific type of protocol being used and thus can be applied to other protocols as well.

### 4.1 Introduction and Overview of the Proposed Interceptor

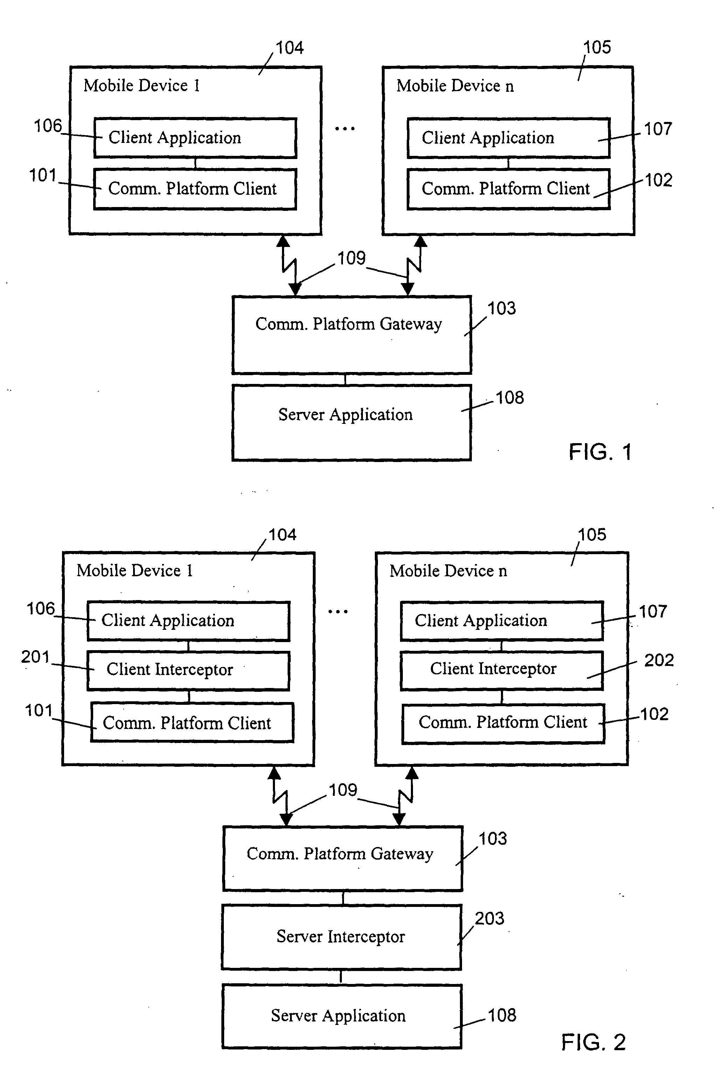

Figure 1 visualizes a typical state of the art situation which gives rise to above mentioned problems.

The communication platform 101, 102, 103 enables mobile client devices 104 to 105 to exchange data with a stationary gateway component 103 using wireless radio networks 109 (e.g. the GSM network). The communication platform ensures a reliable and efficient transmission of the data. It provides crash recovery to reestablish broken down connections and shorthold mode to minimize the costs. It compresses the data to speed up transmission, what also has positive effect on the costs.
The communication platform client offers a client application 106 and 107 on every mobile device the ability to communicate with a server 108, which is connected to the communication platform gateway. Only one server application can be connected to the communication platform gateway at a time. Multiple mobile devices can be connected simultaneously to the communication gateway, so multiple client applications can communicate with this server application.

Despite all of the problems mentioned, which arise in the situation depicted in Fig. 1, digital data connections from GSM-equipped PCs to corporate data centers offer new levels of mobility to remote access users. The **Interceptor** solution as proposed by the current invention exploits this facility and complements it to overcome some inherent disadvantages of GSM data - high cost, unreliable connections, restricted bandwidth and exposure to loss of confidentiality and integrity.

The Interceptor applies an interception mechanism in order to improve the transmission qualities of the wireless connection and compensate for certain disadvantageous characteristics of the wireless communication protocol.

Fig. 2 visualizes in a contrasting manner with respect to Fig. 1 how and where the proposed intercepting mechanism, represented by a **client Interceptor** 201 and 202 and a **server Interceptor** 203, is extending the state of the art situation.

With the interception mechanism, the Interceptor is not aware of the existing applications. All outgoing TCP/IP connections are intercepted transparently on client and server sides using low-level interception mechanisms; they are then passed to the communication part that forwards them using wireless transmission features. This approach does not require any modification to the TCP/IP stack, but relies on operating system specific mechanisms for request interception. In this way the aim could be obtained very efficiently without the need for changes in the TCP/IP based client/server application. This high performance system consists of two basic elements, an embedded component for transparent interception of TCP/IP requests and a mobile communication platform. The Interceptor uses both components that run on the client and on the server side for the protocol replacement and optimization, or in general for compensation of deficiencies of the underlying wireless communication protocol. The mobile communication platform makes type and behavior of a physical wireless network transparent to applications. This software component can be applied to different kinds of cellular radio networks and is in a state in which it meets or exceeds the expected bandwidth avoidance and decreased TCP/IP access times associated with any wireless network.

The Interceptor makes it possible to configure the way a client and its server exchange data to meet special requirements. The traffic can either be connection-oriented or connectionless; or in other words the current teaching can be applied to both classes of protocols. In case of a connection-oriented protocol the following functionalities can be embodied into the Interceptor for compensating disadvantageous characteristics of the underlying protocol:

### 1. Scalability

The enterprise environment can be configured in a variety of topologies to meet the needs of specific applications and installations. Various cellular radio networks can be used at the same time by the Interceptor.

### 2. Reliability

All data is transmitted unchanged and without any loss. During mobile calls disconnections can also happen at unexpected times - for example when entering a tunnel while downloading a document. The Interceptor has an excellent mobile resilience and holds the session in a special logical off-line mode until reconnection can be effected by automatic retry.

### 3. Shorthold Mode

Shorthold Mode means that it is no longer necessary to hold up the call during idle periods: the Interceptor detects these idle periods and drops the call, reconnecting automatically when there is more traffic. This mode can cut call costs significantly.

### 4. Replacing TCP/IP by wireless optimized transport protocol

The outgoing TCP/IP data stream is intercepted. All requests are routed over one wireless connection to avoid the costly connection establishment overhead. Requests and responses are multiplexed over this connection. The wireless connection uses an optimized proprietary protocol in order to reduce the data traffic. Thus the Interceptor instance multiplexes N connections over a single wireless protocol connection realizing an N-1-N connection mapping.

### 5. Authentication

The client must authenticate at the gateway before data transmission. As the user's session is maintained over potential disconnections (intentional or otherwise), a security level is essential. It is vital to prevent one user from connecting to another's off-line or short-hold disconnected session. The Interceptor security approach ensures that this cannot happen based on a corresponding functionality.

### 6. Compression

The data traffic is compressed using the V42bis algorithm to speed up the transfers and to reduce costs. In other words, the Interceptor also may make use of specific compression algorithms.

As already indicated above the Interceptor approach is not limited to connection-oriented protocols (between the client Interceptor and the server Interceptor). For instance to reduce transmission costs, the Interceptor supports in addition connectionless radio networks in the same way.

### 4.2 Interceptor Architecture

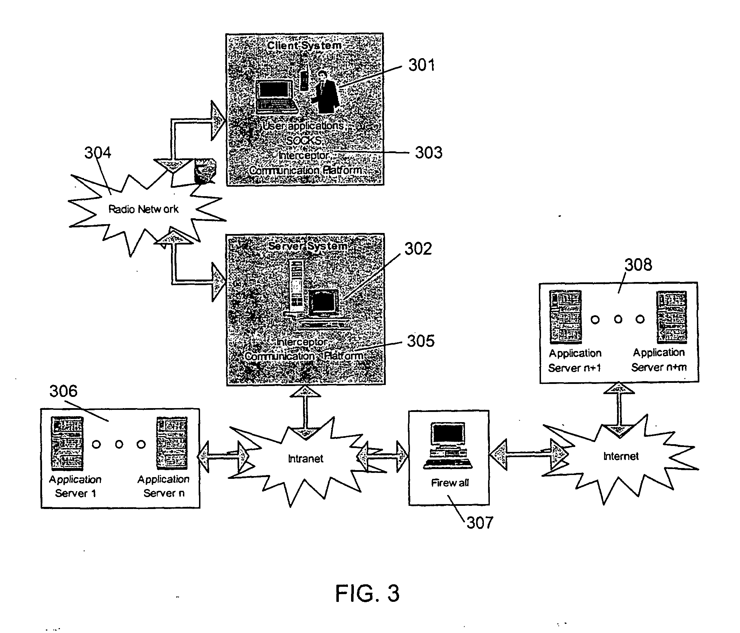

Fig. 3 reflects an overall situation in which the proposed Interceptor technology can be exploited beneficially. It may be viewed as a typical scenario for using the Interceptor. The mobile user represented by the client system 301 (being represented for instance by a mobile computer or a mobile phone) may use various TCP/IP based applications. Examples of that kind of applications are Internet browsers using HTTP , e-mail programs using SMTP, news using NNTP, terminal emulation programs using TELNET or Lotus Notes using a proprietary protocol. The corresponding application server 302 can be part of the intranet or the Internet.

Beside the user applications the client system consists of the client parts of SOCKS, Interceptor 303 and the communication platform. The SOCKS client is used to redirect all outgoing TCP/IP connections to the Interceptor client. The Interceptor client receives all data sent by the user application over such a TCP/IP connection and transmits them over the Radio Network 304 using the communication platform client. Data received by the communication platform from the Radio Network is transferred to the appropriate user application via the Interceptor client.

The Server System comprises the counterparts of the Interceptor client and communications platform client, namely the Interceptor server 305 and communication platform server. The data sent by the Client System over the Radio Network are received by the communication platform server which delivers them to the Interceptor server. Knowing the IP address and port of the destination the Interceptor server sends the data to the corresponding application server over a TCP/IP connection. And vice versa, data sent by the application server over the TCP/IP connection to the Interceptor server are transmitted to the Client System over the Radio Network using the communication platform server. in the scenario depicted in figure 3 the potential application server 306 may be some server or within the Internet; without deviating from the current teaching the application server may also be located within a private intranet behind some type of firewall 307 as visualized by the application servers 308.

This architectural view nicely reflects the peculiar relationship between client application, client Interceptor, server application and server Interceptor. From the perspective of the client application the client Interceptor is pretending to represent the server application. If client application and client Interceptor reside on the same (mobile or pervasive) computing device, as in the current case, bound by a TCP/IP connection (being based on the assumption of a reliable communication media), this connection will not be subject of any disturbance. The current teaching may be applied as well to a situation where the client application and the client Interceptor reside on different computing devices; but the greatest advantages are achieved if both instances reside on the same computing device as in this case vulnerability of the TCP/IP connection is reduced to the largest extent.
From the perspective of the server application the server Interceptor is pretending to represent the client application. The greatest benefits are achieved if the server Interceptor resides on this computing system, which represents the end point of the unreliable connection (via radio network in the current case). In a typical environment the server applications will reside on computing systems different to that computing system which hosts the server Interceptor; but of course it is not excluded that the server Interceptor and the server application share the same computing system.

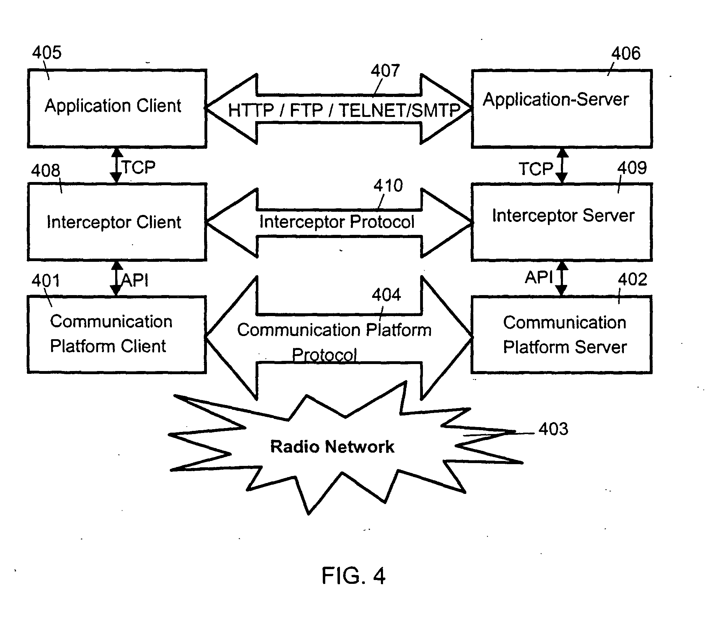

Fig. 4 visualizes the system architecture of the Interceptor solution in a layering model.
The communication platform on the client system 401 is connected to the communication platform on the server system 402 over a first protocol, a wireless radio network 403 in the current example. From a logical perspective this enables a communication 404 between the two communication platforms.
According to the state of the art the client application 405 would set up a TCP/IP connection (the second protocol) over the communication platform with its application server 406. This would establish a logical communication connection 407 between application client and application server.
In contrast to the state of the art the current teaching introduces 2 new instances, the client Interceptor 408 and the server Interceptor 409. If the client application attempts to set up a connection based on the second protocol (the TCP/IP protocol) to the server application, then actually a connection with the client Interceptor will be the established. In a certain sense the client Interceptor pretends to represent the server application with respect to the client application. The client Interceptor is intercepting all communication requests of the client application and maps these requests from the second protocol (TCP/IP) onto the first protocol (unreliable, wireless radio network); it then communicates over the communication platform to its counterpart, the server Interceptor. By means of this logical Interceptor-to-Interceptor communication 410 the basis has been created to compensate for deficiencies of the first protocol. The server Interceptor will then set up a connection to the server application and will perform the reverse mapping from the first protocol to the second protocol. Due to its intercepting behavior the server Interceptor pretends to represent the client application with respect to the server application.

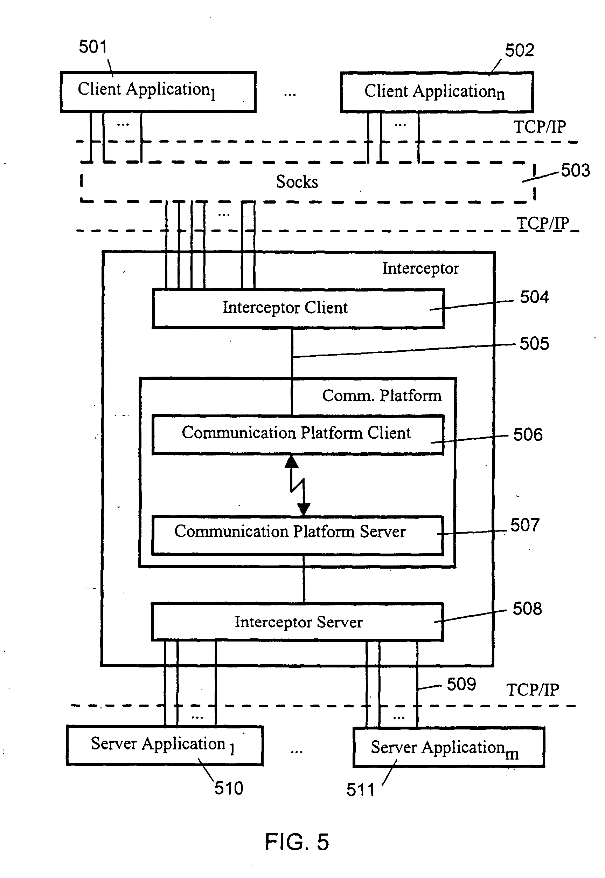

The Interceptor architecture of Fig. 4 is also represented within Fig. 5, but now making use of more modular view. Also referring to the description of Fig. 4, Fig. 5 represents:
- client applications 501 up to 502,
- issuing communication requests over of second protocol 503,
- the client Interceptor 504, intercepting these communication requests, and mapping these communication requests onto a first protocol 505,
- the communication platform client and server 506 and 507 communicating via this first protocol,
- the server Interceptor 508 executing the reverse mapping between the first and the second protocol 509, and
- the server applications 510 up to 511.

In the example of Fig. 5 the Interceptor consists of a mobile (client) and a stationary (server) part.

### 4.3 Interception Architecture and Various Communication Protocols

### 1. The standard LAN client/server scenario using TCP/IP connections

In this scenario client applications communicate with server applications using TCP/IP connections. Both partners may initiate connections or listen for incoming connections. The characteristics of the local area network meet the design goals of the TCP protocol. Thus application of the interception architecture in such an environment will not achieve the full spectrum of advantages. For instance, the advantage of increased reliability (as described above) will not be achieved in a mere LAN environment.

### 2. The wireless scenario in a connection-oriented radio network (e.g. GSM bearer service)

In the GSM network, connections for data transfer can be created by dialing a telephone number. The GSM telephones, which are able to transfer data, usually provide a Hayes-compatible interface to a computer, like a modem. So standard implementations of the PPP protocol (see RFC 1661) can be used to connect a computer to a LAN via the GSM network.
Significant deficiencies adhere to such environments. These characteristics of the GSM network and other connection oriented radio networks required to find other solutions than PPP (Point to Point protocol):
- the radio networks today offer only slow data transfer rates (usually 9600 bit/second)
- depending on the radio coverage the speed of the data transmission may be much slower
- a data connection is lost if there is no more radio coverage
- when the mobile computer is moving it's radio coverage may change rapidly and permanently

These characteristics result in the following problems with PPP:
- once the data connection is lost, all existing TCP/IP connections are closed
- the TCP timeout-mechanisms are not designed for networks with such varying transmission speed and turnaround times (see RFC 813)

The proposed teaching of the current invention is an attractive solution to these problems. Due to the Interceptor technology adapted to the special characteristics of the wireless network, the above mentioned problems are bypassed.
- Broken data connections on the network layer are reestablished without effect on existing TCP/IP connections
- The TCP protocol is not used on the wireless link, instead the communication platform uses a protocol with adjusted timeout-mechanisms

The solution is transparent to the client and server applications. That means they still use their old TCP/IP interface. By means of the Interceptor component, which catches the TCP/IP traffic (using SOCKS) and transfers it using the communication platform, already existing client and server applications may benefit from the current teaching without any adaptation effort directed to these applications; in other words, existing applications can exploit the current teaching transparently. To give some further examples, the following protocols can be handled by the Interceptor technology: http (see RFC 2068) , SMTP (Internet Mail, see RFC 821) , NNTP (Internet News, see RFC 977) and of course many more.

### 3. SOCKS

In a preferred embodiment the current invention exploits the SOCKS protocol (see RFC 1928) to catch all the TCP/IP connections a client application opens with a server application. Usually the SOCKS protocol is used to establish TCP/IP connections over a firewall. A SOCKS client redirects opening TCP/IP connections to a SOCKS server. The first bytes transferred over a new connection tell the SOCKS server the IP address and the remote port the client application originally used when opening the connection. So the SOCKS server can open a second TCP/IP connection with this IP address and remote port and forward the traffic of each of the TCP/IP connections to its counterpart.
The Interceptor client acts as a SOCKS server; this allows the client Interceptor to pretend to represent the corresponding server application. A SOCKS client must be installed on the mobile computer to redirect all outgoing TCP/IP connections (except "localloop"-connections) to the Interceptor client ("localhost", IP address 127.0.0.1). SOCKS clients are available for almost every operating system.

### 4.4 Interception, Connection Handling and Name Resolution

The Interceptor client and the Interceptor server communicate using the communication platform. Every time a client application tries to open a TCP/IP connection with a server application, the connection is redirected to the Interceptor client. The Interceptor client fetches the original destination IP address and the remote port using the SOCKS protocol. Then it transfers this information to the Interceptor server, which opens a TCP/IP connection with the server application using this IP address and remote port.
If the Interceptor server fails to open the connection with the server application, the Interceptor client closes the connection with the client application.

All data sent by the client application over a TCP/IP connection is forwarded by the Interceptor client via the communication platform to the Interceptor server, which sends it to the corresponding server application.

All data sent by the server application over a TCP/IP connection is forwarded by the Interceptor server via the communication platform to the Interceptor client, which sends it to the corresponding client Application.

When the client or the server application closes a TCP/IP connection, the Interceptor will close the connection with it's counterpart.

The proposed interception mechanism has also to address the problem of name resolution. Typically the actual name resolution is provided by so-called "domain name services" (DNS).
Most available SOCKS clients handle only TCP/IP traffic. This is a problem, because the client applications might use domain name resolution (DNS, see RFC 1101) to obtain an IP address of the host of a server application. DNS uses UDP.
For this reason the current teaching suggests to implement the Interceptor such, that it also acts as a domain name server. Every name resolution request it receives from a client application is forwarded to an Interceptor server, which again forwards it to a real domain name server. For each request the Interceptor server forwards it uses a different local UDP port, so the answers of the real domain name server can be assigned to the requesting clients. The Interceptor server sends those answers back to the correct Interceptor client, which forwards them to the originator (i.e. the client application). The system-wide domain name server address of the client system must be configured to be "localhost" (IP address 127.0.0.1), in order to support DNS over Interceptor.

### 4.5 Compensation Functionalities of the Interceptor

As already explained above in the preferred embodiment of the current invention it is suggested to intercept the SOCKS protocol by the client and server Interceptors. SOCKS is a protocol that relays TCP sessions at a firewall host to allow application users transparent access across the firewall. Because the protocol is independent of application protocols, it can be (and has been) used for many different services, such as telnet, ftp, finger, whois, gopher, WWW, etc. The server simply relays the data between the client and the application server, incurring minimum processing overhead. Since SOCKS never has to know anything about the application protocol, it should also be easy for it to accommodate applications which use encryption to protect their traffic from nosey snoopers.
Instead to communicate with the SOCKS server in the preferred embodiment of the current invention the SOCKS client communicates with the Interceptor client running on the mobile device. All data the Interceptor client receives from the SOCKS client will be send to the Interceptor server using the communication platform. The tasks normally done by the SOCKS server is now done by the Interceptor client and Interceptor server.

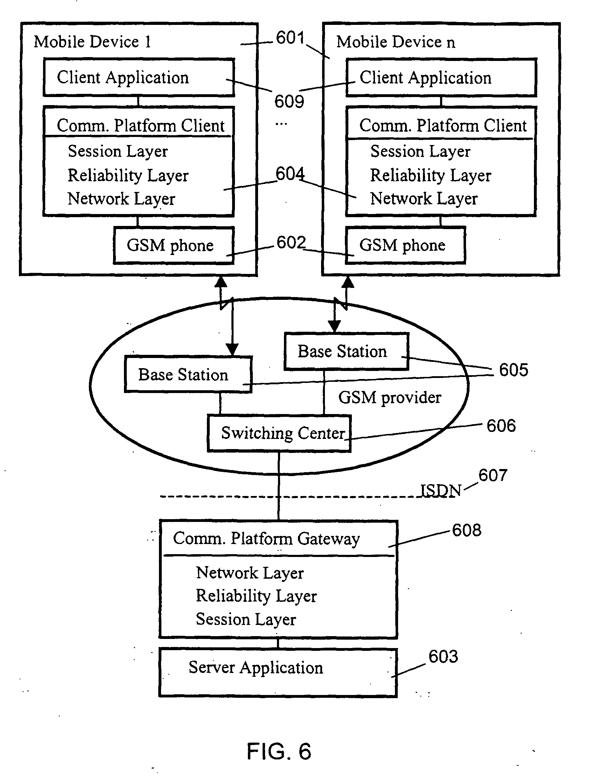

Fig. 6 depicts a typical GSM network according to the state of the art wherein mobile devices 601 exploit mobile phones 602 to connect to a server application 603.
The client network layer 604 uses a GSM phone 602 to physically connect to the gateway network layer. The GSM phone connects to a base station 605 of the GSM network provider and the switching center 606 of the provider connects via ISDN 607 to the gateway network layer 608 (using the V.110 protocol).

If within this example environment the Interceptor technology as described above would be introduced,
- within each of the mobile devices 601 a client Interceptor would be embodied between the client applications 609 and the communication platforms 604; and
- a server Interceptor would be embodied between the server application 603 and the communication platform gateway 608.

In such an example environment enhanced with the proposed Interceptor technology the cooperation of the client Interceptors and the server Interceptors would achieve significant advantages by successfully dealing with the following problem situations:

### 1. Crash Recovery

Physical connections over GSM networks may be interrupted at any time due to a loss of radio coverage. This will happen frequently when the mobile device really is moving around.
The Interceptor technology would compensate this deficiency: every time a network layer has to send some data and there is no physical connection in place, it tries to set up a new physical connection with its peer. The attempt to set up a connection is repeated until it is successful or the logical connection is closed by the session layer because the reliability layer has detected a session timeout.

### 2. Shorthold Mode

The Interceptor technology in place will close physical connections which are not used for a longer time to reduce costs and to reduce the effort to administer unused connections. As soon as the reliability layer passes new data, the connection will be set up again. Thus the Interceptor approach allows to compensate efficiency deficiencies of the underlying protocol.

### 3. Establishing a new Connection

When a TCP-based client wishes to establish a connection to an application server, the SOCKS client first must open a TCP connection to the Interceptor client. If the connection request succeeds, the SOCKS client sends a version identifier / method selection message. The Interceptor client sends a METHOD selection message to the SOCKS client saying "NO AUTHENTICATION REQUIRED". After that the SOCKS client sends a CONNECT request to the Interceptor client containing the destination address and destination port. The Interceptor client evaluates the request and sends a reply message saying "SUCCEEDED" to the SOCKS client.

Moreover the Interceptor client sends an Open request packet over the Radio Network using the communication platform to the Interceptor server. This Open request packet contains the destination address, destination port and a client connection identifier (client conn id). The Interceptor server establishes a TCP connection to the application server using the given destination address and destination port. This TCP connection is associated with the given client connection identifier and the client identifier (client id).

### 4. Closing a connection

The application client as well as the application server may close a connection. In the first case the Interceptor client sends a Close request packet using the communication platform to the Interceptor server, which then closes the TCP connection to the application server. In the second case the Interceptor server sends a Close request packet using the communication platform to the Interceptor client, which then closes the TCP connection to the application client.

### 5. Transferring data

The data originated by the client application is send to the Interceptor client. The Interceptor client adds the client connection identifier to the data before sending them to the Intercept server. With the information of the client connection identifier the Interceptor server decides over which TCP connection the data have to be send to the appropriate application server.

The data originated by the server application is transmitted to the Interceptor server over the existing TCP connection. The Interceptor server adds the client connection identifier for that TCP connection to the data. On the other hand the Interceptor server knows the client identifier (client id) for the TCP connection and can send the data to the Interceptor client. With the information of the client connection identifier the Interceptor client decides over which TCP connection the data have to be send to the appropriate application client.

### 6. Insufficient Transmission Capacity

If the Interceptors determine that the capacity (that is the band width) of the connection is not sufficient to process of transmission request within a the certain time frame, the client Interceptor and the server Interceptor could decide to establish additional connections between both in parallel. Due to the multitude of parallel connections providing additional transmission capabilities the Interceptors are now able to perform the transmission within a significant shorter time frame.

### 7. Multiplexing Multitude of Connections

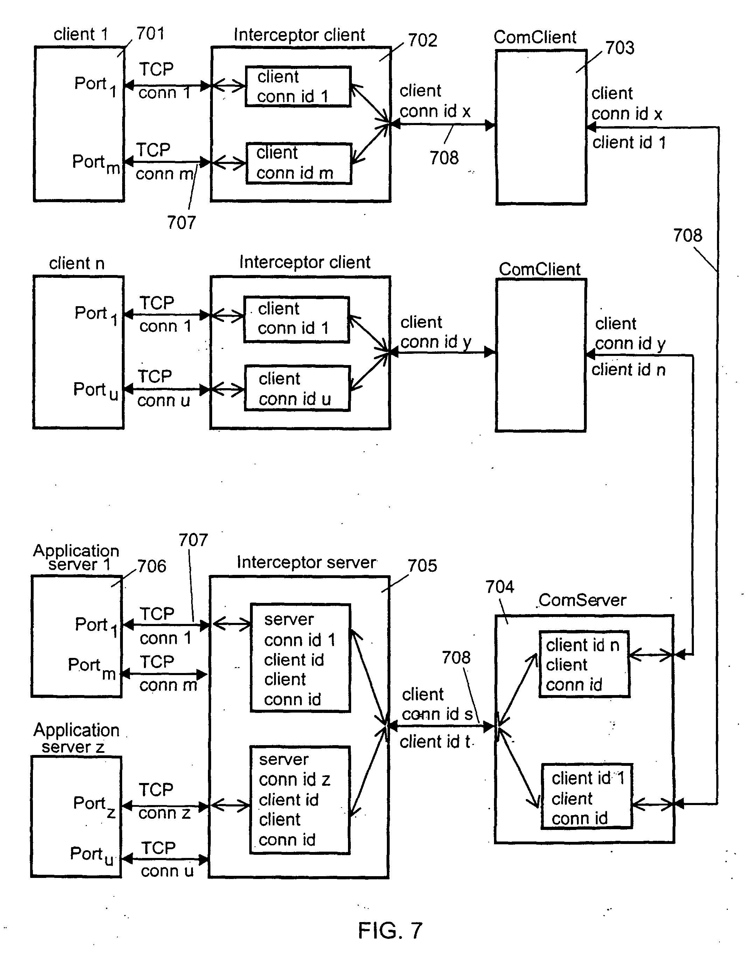

Fig. 7 reflects how the Interceptor approach can be exploited to multiplex a multitude of parallel connections over a single connection.
Referring to Fig. 7 the client application 701 communicates via a client Interceptor 702, a communication platform 703 on the client system, a communication platform 704 on the server system, with a server Interceptor 705 to the server application 706. As can be seen from Fig. 7 the client Interceptor and the server Interceptor can be used to multiplex a multitude of parallel connections 707 over and a single connection 708. With this Interceptor functionality exploitation of the underlying protocol can be optimized in terms of efficiency and costs.

## Claims

1. A method of data communication for compensating for characteristics of a first protocol for data communication over a connection between a client-application(106) and a server-application(108),wherein said client-application(106) and said server-application(108) use a second protocol for data communication, which is mapped onto said first protocol for actual communication, said method comprising a first step of:
intercepting by a client-interceptor(201) of a data-communication-request based on said second protocol of said client-application;
a second step of:
mapping by said client-interceptor(201) of said communication-request onto said first protocol and performing data communication to server-interceptor (203); and
a third step of:
mapping by said server-interceptor(203) of said communication-request back onto said second protocol and delivering it to said server-application,
wherein the client-interceptor(201) acts on behalf of said server-application by pretending to represent said server-application and the server-interceptor(203) acts on behalf of said client-application by pretending to represent said client application,
the method thereby enabling the client-interceptor and the server-interceptor to transparently compensate for characteristics of the first protocol, the method **characterised in that**, if said client-interceptor or said server-interceptor determines that the capacity of said connection is not sufficient to process said communication-request within a certain time frame, compensating by reestablishing one or more additional connections for parallel communication.

2. Method according to claim 1,
wherein said first protocol is an unreliable and connection-oriented protocol, and
if said client-interceptor(201) or said server-interceptor(203) determines a loss of a connection, said client-interceptor or said server-interceptor transparently compensating by reestablishing a new connection instead of signaling said loss to said client-application(106) and said server-application(108), and/or
if said client-interceptor(201) or said server-interceptor(203) determines that a connection is idle, compensating by dropping said connection transparently and reestablishing a new connection once a new communication-request from said client-application(106) or said server-application(108) is intercepted.

3. Method according to claim 2,
wherein said second protocol is connection-oriented, and
wherein said client-interceptor(201) and said server-interceptor (203) intercepting in said first step and said second step a multitude of connections of said second protocol between said client-application and said client-interceptor and between said server-application and said server-interceptor.

4. Method according to claim 3,
wherein said multiple connections are multiplexed over a single connection of said first protocol to provide for a efficient usage of underlying communication media.

5. Method according to claim 3,
wherein said second protocol is connection-oriented, and
wherein said client-interceptor(201), upon intercepting in said first step a request to open a connection to said server-application(108), is opening a connection to said server-interceptor(203) instead and said server-interceptor is opening a connection to said server-application.

6. Method according to claim 5,
wherein said client-interceptor(201) is receiving with said request to open a connection an identification of said server-application(108), and
wherein said client-interceptor(201) is forwarding said identification to a potentially different second server-interceptor for address resolution within said first protocol, and
wherein said client-interceptor is using said returned address for opening said connection to said server interceptor.

7. Method according to anyone of claims 2 to 6,
wherein said client-application and said client-interceptor residing in a first computer system and said server-interceptor residing in a second computer system.

8. Method according to claim 7,
wherein said first protocol is a wireless communication protocol over wireless communication media.

9. Method according to anyone of claim 8,
wherein said first computer system is forming the first end of said wireless communication media and said second computer system is forming the second end of said wireless communication media, and
wherein said second computer system is forming the first end of a wire- or fiber-based communication media and a third computer system executing said server application is forming the second end of said wire- or fiber-based communication media.

10. A system for data communication for compensating for characteristics of a first protocol for data communication between a client-application and a server-application, said system comprising a client interceptor and a server interceptor adapted for carrying out the steps of the method according to any one of the preceding claims 1 to 9.

11. A data processing program for execution in a data processing system comprising software code portions for performing a method according to any one of the preceding claims 1 to 9 or any one of claims 15 or 16 when said program is run on said data processing system.

12. A computer program product stored on a computer usable medium, comprising computer readable program means for causing a data processing system to perform a method according to any one of the preceding claims 1 to 9 or any one of claims 15 or 16 when said program is run on said data processing system.

13. A client-interceptor for compensating for characteristics of a first protocol for data communication over a connection between a client-application (106) and a server-application(108), wherein said client-application(106) and said server-application(108) use a second protocol for data communication, which is mapped onto said first protocol for actual communication, said client-interceptor comprising:
means for intercepting a data-communication-request from a client application based on said second protocol of said client-application;
means for mapping said communication-request onto said first protocol; and
means for performing data communication to a server-interceptor(203),
wherein the client interceptor is operable to act on behalf of said server-application by pretending to represent said server-application,
thereby enabling the client-interceptor to transparently compensate for characteristics of the first protocol,
the client-interceptor **characterised by** comprising means, responsive to determining that the capacity of said connection is not sufficient to process said communication-request within a certain time frame, for compensating by reestablishing one or more additional connections for parallel communication.

14. A server-interceptor for compensating for characteristics of a first protocol for data communication over a connection between a client-application(106) and a server-application(108), wherein said client-application(106) and said server-application(108) use a second protocol for data communication, which is mapped onto said first protocol for actual communication, said server-interceptor comprising:
means for receiving a data-communication request from a client application via a client-interceptor, the client-interceptor having mapped the client's data-communication request from the second protocol to the first protocol;
means for mapping said communication-request back onto said second protocol and delivering it to said server-application, and
means for intercepting a response from the server-application to the client application,
the server-interceptor(203) operable to act on behalf of said client-application by pretending to represent said client application,
thereby enabling the server-interceptor to transparently compensate for characteristics of the first protocol,
the server interceptor **characterised by** comprising means, responsive to determining that the capacity of said connection is not sufficient to process said communication-request within a certain time frame, for compensating by reestablishing one or more additional connections for parallel communication.

15. A method for a client-interceptor, the method for compensating for characteristics of a first protocol for data communication over a connection between a client-application (106) and a server-application(108), wherein said client-application(106) and said server-application(108) use a second protocol for data communication, which is mapped onto said first protocol for actual communication, said method comprising:
intercepting a data-communication-request from a client application based on said second protocol of said client-application;
mapping said communication-request onto said first protocol; and
performing data communication to a server-interceptor(203),
wherein the client interceptor is operable to act on behalf of said server-application by pretending to represent said server-application,
thereby enabling the client-interceptor to transparently compensate for characteristics of the first protocol,
the method **characterised by** comprising the step of, responsive to determining that the capacity of said connection is not sufficient to process said communication-request within a certain time frame, compensating by reestablishing one or more additional connections for parallel communication.

16. A method for a server-interceptor, the method for compensating for characteristics of a first protocol for data communication over a connection between a client-application(106) and a server-application(108), wherein said client-application(106) and said server-application(108) use a second protocol for data communication, which is mapped onto said first protocol for actual communication, said method comprising:
receiving a data-communication request from a client application via a client-interceptor, the client-interceptor having mapped the client's data-communication request from the second protocol to the first protocol;
mapping said communication-request back onto said second protocol and delivering it to said server-application, and
intercepting a response from the server-application to the client application,
the server-interceptor(203) operable to act on behalf of said client-application by pretending to represent said client application,
thereby enabling the server-interceptor to transparently compensate for characteristics of the first protocol,
the method **characterised by** comprising the step of, responsive to determining that the capacity of said connection is not sufficient to process said communication-request within a certain time frame, compensating by reestablishing one or more additional connections for parallel communication.

## Patentansprüche

1. Datenübertragungsverfahren zur Kompensation von Eigenschaften eines ersten Protokolls zur Datenübertragung über eine Verbindung zwischen einer Client-Anwendung (106) und einer Server-Anwendung (108), bei welchem die Client-Anwendung (106) und die Server-Anwendung (108) für die Datenübertragung ein zweites Protokoll verwenden, das auf das erste Protokoll für die eigentliche Datenübertragung abgebildet wird, und wobei das Verfahren Folgendes umfasst:
einen ersten Schritt zum Abfangen einer auf dem zweiten Protokoll der Client-Anwendung basierenden Datenübertragungsanforderung durch eine Client-Abfangeinheit (201);
einen zweiten Schritt zum Abbilden der Datenübertragungsanforderung durch die Client-Abfangeinheit (201) auf das erste Protokoll und zum Durchführen der Datenübertragung zur Server-Abfangeinheit (203); und
einen dritten Schritt zum Abbilden der Datenübertragungsanforderung durch die Server-Abfangeinheit (203) zurück auf das zweite Protokoll und zum Senden dieser Datenübertragungsanforderung zur Server-Anwendung,
wobei die Client-Abfangeinheit (201) für die Server-Anwendung tätig ist, indem sie vermeintlich die Server-Anwendung darstellt , und die Server-Abfangeinheit (203) für die Client-Anwendung tätig ist, indem sie vermeintlich die Client-Anwendung darstellt,
sodass das Verfahren die Client-Abfangeinheit und die Server-Abfangeinheit in die Lage versetzt, Eigenschaften des ersten Protokolls auf transparente Weise zu kompensieren, wobei das Verfahren **dadurch gekennzeichnet ist, dass** es die Kompensation durch Neueinrichten einer oder mehrerer zusätzlicher Verbindungen für die parallele Datenübertragung vornimmt, wenn die Client-Abfangeinheit oder die Server-Abfangeinheit feststellt, dass die Kapazität der Verbindung zur Verarbeitung der Datenübertragungsanforderung innerhalb eines bestimmten Zeitrahmens nicht ausreicht.

2. Verfahren nach Anspruch 1,
bei welchem das erste Protokoll ein unsicheres und verbindungsorientiertes Protokoll ist und,
wenn die Client-Abfangeinheit (201) oder die Server-Abfangeinheit (203) den Ausfall einer Verbindung feststellt, die Client-Abfangeinheit oder die Server-Abfangeinheit die Kompensation auf transparente Weise vornimmt, indem sie diesen Ausfall nicht der Client-Anwendung (106) und der Server-Anwendung (108) mitteilt, sondern eine neue Verbindung einrichtet, und/oder,
wenn die Client-Abfangeinheit (201) oder die Server-Abfangeinheit (203) feststellt, dass eine Verbindung inaktiv ist, diese Verbindung auf transparente Weise trennt und eine neue Verbindung einrichtet, sobald von der Client-Anwendung (106) oder der Server-Anwendung (108) eine neue Kommunikationsanforderung abgefangen wird.

3. Verfahren nach Anspruch 2,
bei welchem das zweite Protokoll verbindungsorientiert ist und
bei welchem die Client-Abfangeinheit (201) und die Server-Abfangeinheit (203) während des ersten und des zweiten Schrittes eine Vielzahl von Verbindungen des zweiten Protokolls zwischen der Client-Anwendung und der Client-Abfangeinheit und zwischen der Server-Anwendung und der Server-Abfangeinheit abfangen.

4. Verfahren nach Anspruch 3,
bei welchem diese Vielzahl von Verbindungen über eine einzelne Verbindung gemultiplext werden, um das zur Verfügung stehende Kommunikationsmedium effektiv zu nutzen.

5. Verfahren nach Anspruch 3,
bei welchem das zweite Protokoll verbindungsorientiert ist und
bei welchem die Client-Abfangeinheit (201), nachdem diese im ersten Schritt eine Anforderung zur Herstellung einer Verbindung zur Server-Anwendung (108) empfangen hat, stattdessen eine Verbindung zur Server-Abfangeinheit (203) und diese wiederum eine Verbindung zur Server-Anwendung herstellt.

6. Verfahren nach Anspruch 5,
bei welchem die Client-Abfangeinheit (201) zusammen mit der Anforderung zur Herstellung einer Verbindung eine Kennung der Server-Anwendung (108) empfängt und
bei welchem die Client-Abfangeinheit (201) diese Kennung zu einer möglicherweise verschiedenen zweiten Server-Abfangeinheit weiterleitet, damit die Adresse im ersten Protokoll aufgelöst wird, und
bei welchem die Client-Abfangeinheit zur Herstellung der Verbindung zur Server-Abfangeinheit die zurückgesendete Adresse verwendet.

7. Verfahren nach einem der Ansprüche 2 bis 6,
bei welchem sich die Client-Anwendung und die Client-Abfangeinheit in einem ersten Computersystem und die Server-Abfangeinheit in einem zweiten Computersystem befinden.

8. Verfahren nach Anspruch 7,
bei welchem das erste Protokoll ein Protokoll für drahtlose Kommunikation über ein drahtloses Kommunikationsmedium ist.

9. Verfahren nach Anspruch 8,
bei welchem das erste Computersystem das eine Ende des drahtlosen Kommunikationsmediums und das zweite Computersystem das andere Ende des drahtlosen Kommunikationsmediums bilden und
bei welchem das zweite Computersystem das eine Ende eines Kommunikationsmediums auf Draht- oder Lichtwellenleiterbasis bildet und ein drittes die Server-Anwendung ausführendes Computersystem das andere Ende des Kommunikationsmediums auf Draht- oder Lichtwellenleiterbasis bildet.

10. Datenübertragungssystem zur Kompensation der Eigenschaften eines ersten Protokolls zur Datenübertragung zwischen einer Client-Anwendung und einer Server-Anwendung, wobei das System eine Client-Abfangeinheit und eine Server-Abfangeinheit umfasst, welche zur Ausführung der Verfahrensschritte nach einem der vorangehenden Ansprüche 1 bis 9 geeignet sind.

11. Datenübertragungsprogramm zur Ausführung in einem Datenverarbeitungssystem, welches Codefolgen zur Ausführung eines Verfahrens nach einem der vorangehenden Ansprüche 1 bis 9 oder einem der Ansprüche 15 oder 16 umfasst, wenn das Programm in diesem Datenverarbeitungssystem läuft.

12. Computerprogrammprodukt, das in einem computerlesbaren Medium gespeichert ist und computerlesbare Programmmittel umfasst, um ein Datenverarbeitungssystem zur Ausführung eines Verfahrens nach einem der vorangehenden Ansprüche 1 bis 9 oder einem der Ansprüche 15 oder 16 zu veranlassen, wenn das Programm in diesem Datenverarbeitungssystem läuft.

13. Client-Abfangeinheit zur Kompensation von Eigenschaften eines ersten Protokolls zur Datenübertragung über eine Verbindung zwischen einer Client-Anwendung (106) und einer Server-Anwendung (108), bei welcher die Client-Anwendung (106) und die Server-Anwendung (108) für die Datenübertragung ein zweites Protokoll verwenden, das auf das erste Protokoll für die eigentliche Datenübertragung abgebildet wird, und wobei die Client-Abfangeinheit Folgendes umfasst:
ein Mittel zum Abfangen einer auf dem zweiten Protokoll einer Client-Anwendung basierenden Datenübertragungsanforderung von dieser Client-Anwendung;
ein Mittel zum Abbilden der Datenübertragungsanforderung mit dem ersten Protokoll; und
ein Mittel zum Durchführen der Datenübertragung zu einer Server-Abfangeinheit (203)
wobei die Client-Abfangeinheit so betrieben werden kann, dass sie für die Server-Anwendung tätig ist, indem sie vermeintlich die Server-Anwendung darstellt ,
sodass die Client-Abfangeinheit in die Lage versetzt wird, Eigenschaften des ersten Protokolls auf transparente Weise zu kompensieren,
wobei die Client-Abfangeinheit **dadurch gekennzeichnet ist, dass** sie ein Mittel umfasst, welches als Reaktion auf die Feststellung, dass die Kapazität der Verbindung zur Verarbeitung der Kommunikationsanforderung innerhalb eines bestimmten Zeitrahmens nicht ausreicht, die Kompensation durch Neueinrichten einer oder mehrerer zusätzlicher Verbindungen für die parallele Datenübertragung vornimmt.

14. Server-Abfangeinheit zur Kompensation von Eigenschaften eines ersten Protokolls zur Datenübertragung über eine Verbindung zwischen einer Client-Anwendung (106) und einer Server-Anwendung (108), bei welcher die Client-Anwendung (106) und die Server-Anwendung (108) für die Datenübertragung ein zweites Protokoll verwenden, das auf das erste Protokoll für die eigentliche Datenübertragung abgebildet wird, und wobei die Server-Abfangeinheit Folgendes umfasst:
ein Mittel zum Empfangen einer Kommunikationsanforderung von einer Client-Anwendung über eine Client-Abfangeinheit, welche die Kommunikationsanforderung des Clients gemäß dem zweiten Protokoll mit dem ersten Protokoll abgestimmt hat;
ein Mittel zum Abbilden der Datenübertragungsanforderung zurück auf das zweite Protokoll und zum Liefern der Datenübertragungsanforderung zur Server-Anwendung; und
ein Mittel zum Abfangen einer Antwort von der Server-Anwendung zur Client-Anwendung,
wobei die Server-Abfangeinheit (203) so betrieben werden kann, dass sie für die Client-Anwendung tätig ist, indem sie vermeintlich die Client-Anwendung darstellt ,
sodass die Server-Abfangeinheit in der Lage ist, Eigenschaften des ersten Protokolls auf transparente Weise zu kompensieren,
wobei die Server-Abfangeinheit **dadurch gekennzeichnet ist, dass** sie ein Mittel umfasst, welches als Reaktion auf die Feststellung, dass die Kapazität der Verbindung zur Verarbeitung der Datenübertragungsanforderung innerhalb eines bestimmten Zeitrahmens nicht ausreicht, die Kompensation durch Neueinrichten einer oder mehrerer zusätzlicher Verbindungen für die parallele Datenübertragung vornimmt.

15. Verfahren für eine Client-Abfangeinheit zur Kompensation von Eigenschaften eines ersten Protokolls zur Datenübertragung über eine Verbindung zwischen einer Client-Anwendung (106) und einer Server-Anwendung (108), bei welchem die Client-Anwendung (106) und die Server-Anwendung (108) für die Datenübertragung ein zweites Protokoll verwenden, das auf das erste Protokoll für die eigentliche Datenübertragung abgebildet wird, und wobei das Verfahren Folgendes umfasst:
Abfangen einer Datenübertragungsanforderung von einer Client-Anwendung auf der Grundlage des zweiten Protokolls der Client-Anwendung;
Abbilden der Datenübertragungsanforderung auf das erste Protokoll; und
Durchführen der Datenübertragung zu einer Server-Abfangeinheit (203),
wobei die Client-Abfangeinheit (201) so betrieben werden kann, dass sie für die Server-Anwendung tätig ist, indem sie vermeintlich die Server-Anwendung darstellt,
sodass die Client-Abfangeinheit Eigenschaften des ersten Protokolls auf transparente Weise kompensieren kann,
wobei das Verfahren **dadurch gekennzeichnet ist, dass** es den Schritt der Kompensation durch Neueinrichten einer oder mehrerer zusätzlicher Verbindungen für die parallele Datenübertragung als Reaktion auf die Feststellung vornimmt, dass die Kapazität der Verbindung zur Verarbeitung der Kommunikationsanforderung nicht ausreicht.

16. Verfahren für eine Server-Abfangeinheit zur Kompensation von Eigenschaften eines ersten Protokolls zur Datenübertragung über eine Verbindung zwischen einer Client-Anwendung (106) und einer Server-Anwendung (108), bei welchem die Client-Anwendung (106) und die Server-Anwendung (108) für die Datenübertragung ein zweites Protokoll verwenden, das auf das erste Protokoll für die eigentliche Datenübertragung abgebildet wird, und wobei das Verfahren Folgendes umfasst:
Empfangen einer Kommunikationsanforderung von einer Client-Anwendung über eine Client-Abfangeinheit, welche die Kommunikationsanforderung des Clients auf der Grundlage des zweiten Protokolls mit dem ersten Protokoll abgestimmt hat;
Abbilden der Datenübertragungsanforderung zurück auf das zweite Protokoll und Liefern der Kommunikationsanforderung zur Server-Anforderung, und
Abfangen einer Antwort von der Server-Anwendung an die Client-Anwendung,
wobei die Server-Abfangeinheit (203) so betrieben werden kann, dass sie für die Client-Anwendung tätig ist, indem sie vermeintlich die Client-Anwendung darstellt,
sodass die Server-Abfangeinheit Eigenschaften des ersten Protokolls auf transparente Weise kompensieren kann,
wobei das Verfahren **dadurch gekennzeichnet ist, dass** es den Schritt der Kompensation durch Neueinrichten einer oder mehrerer zusätzlicher Verbindungen für die parallele Datenübertragung als Reaktion auf die Feststellung vornimmt, dass die Kapazität der Verbindung zur Verarbeitung der Kommunikationsanforderung innerhalb eines bestimmten Zeitrahmens nicht ausreicht.

## Revendications

1. Procédé de communication de données destiné à compenser les caractéristiques d'un premier protocole pour une communication de données sur une connexion entre une application client (106) et une application serveur (108), dans lequel ladite application client (106) et ladite application serveur (108) utilisent un second protocole pour une communication de données, qui est mappée sur ledit premier protocole pour une communication réelle, ledit procédé comprenant une première étape consistant à :
intercepter grâce à un intercepteur client (201) une demande de communication de données fondée sur ledit second protocole de ladite application client,
une seconde étape consistant à :
mapper grâce audit intercepteur client (201) ladite demande de communication sur ledit premier protocole et exécuter une communication de données pour l'intercepteur serveur (203), et
une troisième étape consistant à :
mapper grâce audit intercepteur serveur (203) ladite demande de communication en retour sur ledit second protocole et la délivrer à ladite application serveur,
dans lequel l'intercepteur client (201) agit pour le compte de ladite application serveur en prétendant représenter ladite application serveur, et l'intercepteur serveur (203) agit pour le compte de ladite application client en prétendant représenter ladite application client,
le procédé permettant ainsi à l'intercepteur client et à l'intercepteur serveur de compenser de façon transparente les caractéristiques du premier protocole, le procédé étant **caractérisé en ce que**, si ledit intercepteur client ou ledit intercepteur serveur détermine que la capacité de ladite connexion n'est pas suffisante pour traiter ladite demande de communication à l'intérieur d'un certain créneau de temps, il effectue la compensation en rétablissant une ou plusieurs connexions supplémentaires en vue d'une communication parallèle.

2. Procédé selon la revendication 1,
dans lequel ledit premier protocole est un protocole non fiable et orienté connexion, et
si ledit intercepteur client (201) ou ledit intercepteur serveur (203) détermine une perte d'une connexion, ledit intercepteur client ou ledit intercepteur serveur effectue la compensation de façon transparente en rétablissant une nouvelle connexion au lieu de signaler ladite perte à ladite application client (106) et à ladite application serveur (108), et/ou
si ledit intercepteur client (201) ou ledit intercepteur serveur (203) détermine qu'une connexion est en attente, il effectue la compensation en abandonnant ladite connexion de façon transparente et en rétablissant une nouvelle connexion une fois qu'une nouvelle demande de communication provenant de ladite application client (106) ou de ladite application serveur (108) est interceptée.

3. Procédé selon la revendication 2,
dans lequel ledit second protocole est orienté connexion, et
dans lequel ledit intercepteur client (201) et ledit intercepteur serveur (203) interceptent dans ladite première étape et ladite seconde étape une multitude de connexions dudit second protocole entre ladite application client et ledit intercepteur client et entre ladite application serveur et ledit intercepteur serveur.

4. Procédé selon la revendication 3,
dans lequel lesdites connexions multiples sont multiplexées sur une seule connexion dudit premier protocole, pour permettre une utilisation efficace du support de communication sous-jacent.

5. Procédé selon la revendication 3,
dans lequel ledit second protocole est orienté connexion, et
dans lequel ledit intercepteur client (201), lors d'une interception dans ladite première étape, d'une demande pour ouvrir une connexion pour ladite application serveur (108) ouvre une connexion pour ledit intercepteur serveur (203) à la place et ledit intercepteur serveur ouvre une connexion pour ladite application serveur.

6. Procédé selon la revendication 5,
dans lequel ledit intercepteur client (201) reçoit avec ladite demande pour ouvrir une connexion, une identification de ladite application serveur (108), et
dans lequel ledit intercepteur client (201) retransmet ladite identification à un second intercepteur serveur potentiellement différent en vue d'une résolution d'adresse à l'intérieur dudit premier protocole, et
dans lequel ledit intercepteur client utilise ladite adresse renvoyée en vue d'ouvrir ladite connexion pour ledit intercepteur serveur.

7. Procédé selon l'une quelconque des revendications 2 à 6,
dans lequel ladite application client et ledit intercepteur client résident dans un premier système informatique et ledit intercepteur serveur réside dans un second système informatique.

8. Procédé selon la revendication 7,
dans lequel ledit premier protocole est un protocole de communication sans fil sur un support de communication sans fil.

9. Procédé selon la revendication 8,
dans lequel ledit premier système informatique forme la première extrémité dudit support de communication sans fil et ledit second système informatique forme la seconde extrémité dudit support de communication sans fil, et
dans lequel ledit second système informatique forme la première extrémité d'un support de communication à base de câble ou de fibre et un troisième système informatique exécutant ladite application serveur forme la seconde extrémité dudit support de communication à base de câble ou de fibre.

10. Système destiné à une communication de données afin de compenser les caractéristiques d'un premier protocole pour une communication de données entre une application client et une application serveur, ledit système comprenant un intercepteur client et un intercepteur serveur conçus pour exécuter les étapes du procédé selon l'une quelconque des revendications précédentes 1 à 9.

11. Programme de traitement de données destiné à une exécution dans un système de traitement de données comprenant des parties de code logiciel destinées à exécuter un procédé selon l'une quelconque des revendications précédentes 1 à 9 ou bien l'une quelconque des revendications 15 ou 16, lorsque ledit programme est exécuté sur ledit système de traitement de données.

12. Produit de programme informatique stocké sur un support utilisable par un ordinateur, comprenant un moyen de programme lisible par un ordinateur destiné à amener un système de traitement de données à exécuter un procédé selon l'une quelconque des revendications précédentes 1 à 9 ou bien l'une quelconque des revendications 15 ou 16 lorsque ledit programme est exécuté sur ledit système de traitement de données.

13. Intercepteur client destiné à compenser les caractéristiques d'un premier protocole pour une communication de données sur une connexion entre une application client (106) et une application serveur (108), dans lequel ladite application client (106) et ladite application serveur (108) utilisent un second protocole pour une communication de données, qui est mappée sur ledit premier protocole en vue d'une communication réelle, ledit intercepteur client comprenant :
un moyen destiné à intercepter une demande de communication de données provenant d'une application client sur la base dudit second protocole de ladite application client,
un moyen destiné à mapper ladite demande de communication sur ledit premier protocole, et
un moyen destiné à exécuter une communication de données pour un intercepteur serveur (203),
dans lequel l'intercepteur client peut être mis en oeuvre pour agir pour le compte de ladite application serveur en prétendant représenter ladite application serveur,
en permettant ainsi à l'intercepteur client de compenser de façon transparente les caractéristiques du premier protocole,
l'intercepteur client étant **caractérisé en ce qu'**il comprend un moyen, répondant à une détermination de ce que la capacité de ladite connexion n'est pas suffisante pour traiter ladite demande de communication à l'intérieur d'un certain créneau de temps, pour effectuer la compensation en rétablissant une ou plusieurs connexions supplémentaires en vue d'une communication parallèle.

14. Intercepteur serveur destiné à compenser les caractéristiques d'un premier protocole pour une communication de données sur une connexion entre une application client (106) et une application serveur (108), dans lequel ladite application client (106) et ladite application serveur (108) utilisent un second protocole pour une communication de données, laquelle est mappée sur ledit premier protocole en vue d'une communication réelle, ledit intercepteur serveur comprenant :
un moyen destiné à recevoir une demande de communication de données provenant d'une application client par l'intermédiaire d'un intercepteur client, l'intercepteur client ayant mappé la demande de communication de données du client du second protocole sur le premier protocole,
un moyen destiné à mapper ladite demande de communication en retour sur ledit second protocole et à la délivrer à ladite application serveur, et
un moyen destiné à intercepter une réponse de l'application serveur à l'application client,
l'intercepteur serveur (203) pouvant être mis en oeuvre pour agir pour le compte de ladite application client en prétendant représenter ladite application client,
en permettant ainsi à l'intercepteur serveur de compenser de façon transparente les caractéristiques du premier protocole,
l'intercepteur serveur étant **caractérisé en ce qu'**il comprend un moyen, répondant à une détermination de ce que la capacité de ladite connexion n'est pas suffisante pour traiter ladite demande de communication à l'intérieur d'un certain créneau de temps, pour effectuer la compensation en rétablissant une ou plusieurs connexions supplémentaires pour une communication parallèle.

15. Procédé destiné à un intercepteur client, le procédé étant destiné à compenser les caractéristiques d'un premier protocole pour une communication de données sur une connexion entre une application client (106) et une application serveur (108), dans lequel ladite application client (106) et ladite application serveur (108) utilisent un second protocole pour une communication de données, laquelle est mappée sur ledit premier protocole pour une communication réelle, ledit procédé comprenant :
l'interception d'une demande de communication de données provenant d'une application client fondée sur ledit second protocole de ladite application client,
le mappage de ladite demande de communication sur ledit premier protocole, et
l'exécution d'une communication de données pour un intercepteur serveur (203),
dans lequel l'intercepteur client peut être mis en oeuvre pour agir pour le compte de ladite application serveur en prétendant représenter ladite application serveur,
en permettant ainsi que l'intercepteur client compense de façon transparente les caractéristiques du premier protocole,
le procédé étant **caractérisé en ce qu'**il comprend l'étape consistant à, en réponse à la détermination de ce que la capacité de ladite connexion n'est pas suffisante pour traiter ladite demande de communication à l'intérieur d'un certain créneau de temps, effectuer la compensation en rétablissant une ou plusieurs connexions supplémentaires pour une communication parallèle.

16. Procédé destiné à un intercepteur serveur, le procédé étant destiné à compenser les caractéristiques d'un premier protocole pour une communication de données sur une connexion entre une application client (106) et une application serveur (108), dans lequel ladite application client (106) et ladite application serveur (108) utilisent un second protocole pour une communication de données, laquelle est mappée sur ledit premier protocole pour une communication réelle, ledit procédé comprenant :
la réception d'une demande de communication de données depuis une application client par l'intermédiaire d'un intercepteur client, l'intercepteur client ayant mappé la demande de communication de données du client du second protocole sur le premier protocole,
le mappage de ladite demande de communication en retour sur ledit second protocole et sa délivrance à ladite application serveur, et
l'interception d'une réponse provenant de l'application serveur pour l'application client,
l'intercepteur serveur (203) pouvant être mis en oeuvre pour agir pour le compte de ladite application client en prétendant représenter ladite application client,
en permettant ainsi à l'intercepteur serveur de compenser de façon transparente les caractéristiques du premier protocole,
le procédé étant **caractérisé en ce qu'**il comprend l'étape consistant à, en réponse à la détermination de ce que la capacité de ladite connexion n'est pas suffisante pour traiter ladite demande de communication à l'intérieur d'un certain créneau de temps, effectuer la compensation en rétablissant une ou plusieurs connexions supplémentaires pour une communication parallèle.
